(19) Europäisches Patentamt

European Patent Office

Office européen des brevets

(11) EP 0 984 356 A1

(12) EUROPEAN PATENT APPLICATION

(43) Date of publication:
08.03.2000 Bulletin 2000/10

(51) Int. Cl.⁷: G06F 7/50

(21) Application number: 99108779.2

(22) Date of filing: 03.05.1999

(84) Designated Contracting States:
AT BE CH CY DE DK ES FI FR GB GR IE IT LI LU MC NL PT SE
Designated Extension States:
AL LT LV MK RO SI

(30) Priority: 03.09.1998 US 146693

(71) Applicant:
Hewlett-Packard Company
Palo Alto, California 94304 (US)

(72) Inventors:
• Dix, Gregory S.
  Fort Collins, CO 80528 (US)
• Martin, Robert J.
  Timnath, CO 80547-0095 (US)
• Lin, Linda L.
  Ft. Collins, CO 80521 (US)

(74) Representative:
Schoppe, Fritz, Dipl.-Ing.
Schoppe, Zimmermann & Stöckeler
Patentanwälte
Postfach 71 08 67
81458 München (DE)

(54) **A carry lookahead adder having a reduced fanout architecture**

(57) A carry lookahead adder (100) having a reduced internal block fanout which is achieved efficiently in terms of the silicon area needed to implement the carry lookahead adder (100). The carry lookahead adder (100) of the present invention is characterized by a modified binary tree structure having carry generate/propagate signal operators (21, 31, 35, 41, 44, 48, 51, 23, 25, 33, 37, 42, 46, 75, 76, 77, 78, 79, 80, 81, 82, 51-54, 83-86, 55, 57, 59, 63, 56, 58, 61, 64) located in such a manner that the maximum internal block fanout is equal to (adder width)/8 for adders having a width of at least 16 bits. For adders having a width of less than 16 bits, the internal block fanout is 2. The routing complexity is increased in order to implement redundant overlapping carry generate/propagate operations which, in turn, decreases the internal block fanout of the adder. However, increases in routing complexity can be accomplished within the minimum X-by-Y area of each stage of the adder. Therefore, the overall performance of the carry lookahead adder (100) of the present invention can be optimized while meeting minimum area requirements.

FIG. 5

EP 0 984 356 A1

Description

## TECHNICAL FIELD OF THE INVENTION

The present invention relates to a carry lookahead adder and, more particularly, to a carry lookahead adder having a reduced internal block fanout architecture which reduces propagation delays and which can be implemented without realizing area penalties.

## BACKGROUND OF THE INVENTION

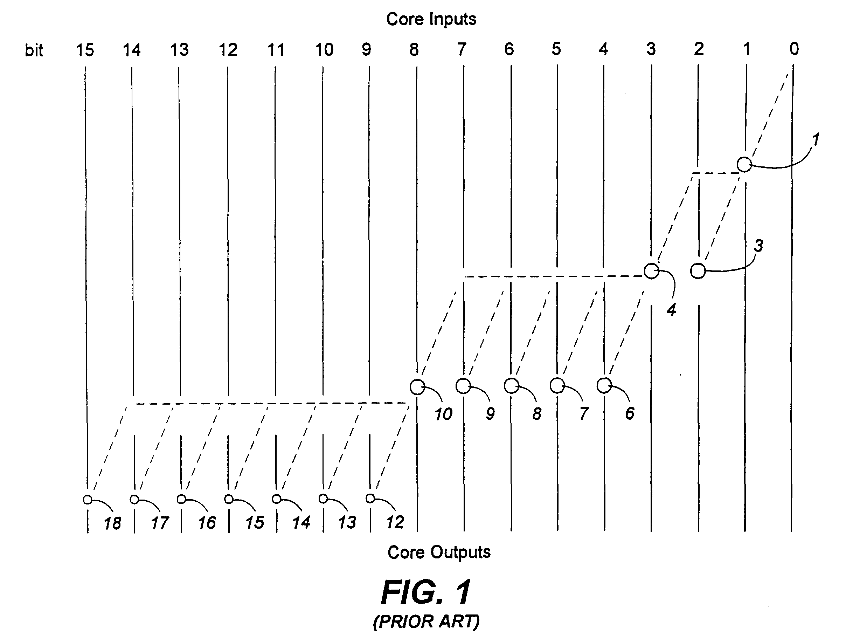

One known type of carry lookahead architecture is characterized by an internal block fanout of(adder width)/2 and a routing complexity of a singe pair of carry generate/propagate signals. One disadvantage of this type of architecture is that performance limitations result due to the excessive internal block fanout of the adder. Fig. 1 illustrates this type of carry lookahead architecture. Each of the "Os" in Fig. 1 represent a logic circuit, each of which is comprised of one or more logic gates. Bit 0 and bits 9 through 15 each have an internal block fanout of 1, bits 1, 2 and 4 through 7 each have an internal block fanout of 2, bit 3 has an internal block fanout of 5, and bit 8 has an internal block fanout of 8.

Therefore, the maximum internal block fanout for the carry lookahead adder illustrated in Fig. 1 is 8, which is extremely large. The propagation delays resulting from the large internal block fanout of the carry lookahead adder greatly limit its performance. However, the routing complexity is relatively simple, which is an advantage of this type of architecture in terms of silicon area required for the carry lookahead adder.

A second known type of carry lookahead adder architecture, which is not shown, is characterized by an internal block fanout of 1 and a routing complexity of (adder width)/2. One disadvantage of this second type of architecture is that the routing complexity results in unrealistic silicon area penalties, although the single internal block fanout reduces propagation delays. If the routing complexity is simplified, the internal block fanout increases dramatically, thereby resulting in performance limitations in terms of large propagation delays.

Accordingly, a need exists for a carry lookahead adder architecture that eliminates performance limitation problems caused by excessive internal block fanout and which is efficient in terms of the silicon area required in order to accommodate the routing complexity of the adder.

## SUMMARY OF THE INVENTION

The present invention provides a carry lookahead adder having a reduced internal block fanout which is achieved efficiently in terms of the silicon area needed to implement the carry lookahead adder. The carry lookahead adder of the present invention is characterized by a modified "binary tree" structure and having redundant overlapping carry generate/propagate signal operators located in such a manner that the maximum internal block fanout is equal to (adder width)/8 for adders having a width of at least 16 bits. For adders having a width of less than 16 bits, the internal block fanout is 2. As a result of the redundant overlapping carry generate/propagate operators, the internal block fanout is reduced without realizing area penalties. Since increases in routing complexity are accomplished by redundantly overlapping the carry generate/propagate operators, no increases in area are required for implementing the carry lookahead adder of the present invention.

In accordance with the present invention, any increases in routing complexity can be accomplished within the minimum X-by-Y area of each stage of the adder. For each stage of a carry lookahead adder, the minimum X dimension of the stage is defined by the number of bits being added together by the adder. The minimum Y dimension of each stage is defined by the logic circuits, also referred to herein as carry propagate/generate operators, implemented in the stage for performing the carry generate/propagate operations. Therefore, the minimum area of each stage is defined by the minimum X dimension times the minimum Y dimension, hereinafter referred to as the minimum X-by-Y area.

With existing carry lookahead architectures, when attempts have been made to decrease the internal block fanout of the adder by increasing the routing complexity, this was not accomplished within the minimum X-by-Y area. Rather, the overall area of the adder was increased due to increases in the area of one or more stages of the adder needed to accommodate the additional routing.. In accordance with the present invention, all routing for each stage can be, but does not have to be, accomplished within the minimum X-by-Y area for the stage. Therefore, the overall performance of the carry lookahead adder of the present invention can be optimized while meeting minimum area requirements.

Other features and advantages of the present invention will become apparent from the following description, drawings and claims.

## BRIEF DESCRIPTION OF THE DRAWINGS

Fig. 1 functionally illustrates an existing carry lookahead adder architecture having an internal block fanout equal to (adder width)/2 and a routing complexity of a single pair of carry generate/propagate signals.

Fig. 2 illustrates a typical binary tree structure used by existing carry lookahead adders.

Fig. 3 illustrates a modified binary tree structure of the carry lookahead adder of the present invention.

Fig. 4 functionally illustrates an 8-bit carry lookahead adder designed and implemented in accordance with the modified binary tree structure shown in Fig. 5.

Fig. 5 functionally illustrates a 16-bit carry lookahead adder designed and implemented in accordance with the modified binary tree structure shown in Fig. 5.

Fig. 6 illustrates a functional schematic diagram of an 8-bit carry lookahead adder in accordance with the present invention which is implemented in accordance with the modified binary tree structure shown in Fig. 5.

Figs. 7A-7F are functional block diagrams of the logic circuits, or carry generate/propagate operators, implemented in various stages of the carry lookahead adder shown in Fig. 6.

## DETAILED DESCRIPTION OF THE INVENTION

As stated above, Fig. 1 is a drawing which illustrates an existing carry lookahead adder architecture having an internal block fanout equal to (adder width)/2 and a routing complexity of a single pair of carry generate/propagate signals. The large "Os" in Fig. 1 indicate that the logic circuits, also referred to herein as carry generate/propagate operators, comprise relatively large logic gates, whereas the small "Os" indicate that the logic circuits comprise relatively small logic gates. All of the carry generate/propagate operators comprised by the adder and the connections between them are not shown in Fig. 1 for ease of illustration. The dashed lines represent the critical path of the signals through the adder, which corresponds to the furthest distance a bit must be routed through the adder from bit 0 at the input stage to bit 15 at the output stage. Only the carry generate/propagate operators that make up the critical path are shown in Fig. 1.

Logic circuit 1 under the core input corresponding to bit 1 is comprised by stage 1 of the carry lookahead adder. Logic circuits 3 and 4 under the core inputs corresponding to bits 2 and 3, respectively, are comprised by stage 2 of the carry lookahead adder. Logic circuits 6 through 10 under the core inputs corresponding to bits 4 through 8, respectively, are comprised by stage 3 of the carry lookahead adder. Logic circuits 12 through 18 under the core inputs corresponding to bits 9 through 15, respectively, are comprised by stage 4 of the carry lookahead adder.

The relatively large logic gates of the carry generate/propagate operators represented by the large "Os" are capable of driving a plurality of gates in subsequent stages and/or of driving signals over relatively long routing paths. With respect to stage 1, the logic circuit 1 under the core input for bit 1, has an internal block fanout of 2 since it drives two carry generate/propagate operators in stage 2, namely, carry generate/propagate operators 3 and 4 under the core inputs for bits 2 and 3, respectively. Carry generate/propagate operator 4 under the core input for bit 3 has an internal block fanout of 5 since it drives five carry generate/propagate operators in stage 3, namely, carry generate/propagate operators 6 through 10 under the core inputs for bits 4 through 8, respectively. Carry generate/propagate operator 10 under the core input for bit 8 has an internal block fanout of 8 since it drives carry generate/propagate operators 12 through 18 under the core inputs for bits 9 through 15, respectively.

The routing scheme implemented by the adder illustrated in Fig. 1 is relatively simple. This can be seen from the fact that, along the critical path, the output of only one carry generate/propagate operator is utilized in a subsequent stage, and only in the immediately succeeding stage. In stage 2, only the output of carry generate/propagate operator 4 is used in a subsequent stage, and only in the immediately succeeding stage, namely, stage 3. Similarly, in stage 3, only the output of carry generate/propagate operator 10 is used in stage 4.

However, although the routing complexity of the carry lookahead adder functionally illustrated in Fig. 1 is relatively simple, the internal block fanout is relatively large. Consequently, the performance of the adder will be limited due to large propagation delays.

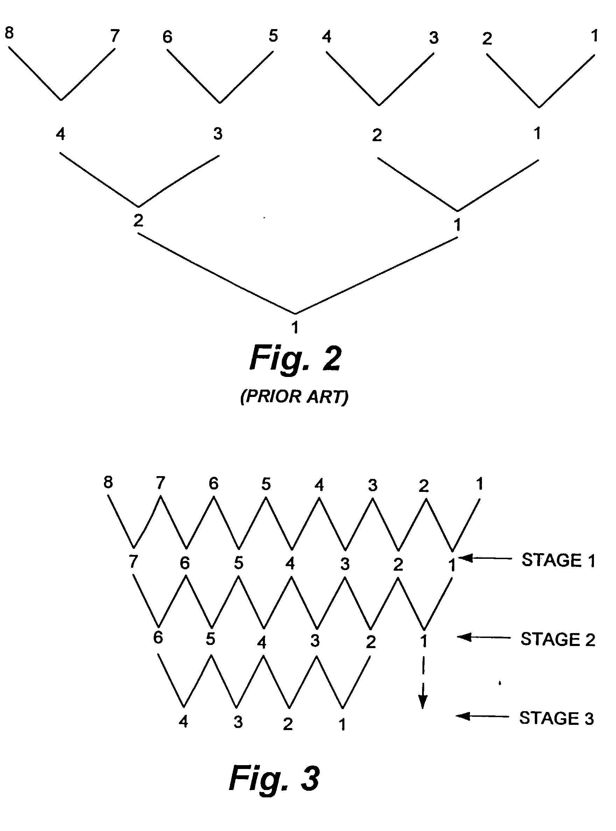

Fig. 2 illustrates the binary tree structure for the carry lookahead adder shown in Fig. 1. This structure is called a binary tree because of the manner in which each subsequent stage of the adder performs half the number of carry generate/propagate operations performed in the immediately preceding stage.

Fig, 3 illustrates the modified binary tree structure of the present invention in accordance with the preferred embodiment. It is readily apparent from Fig. 3 that the modified binary tree structure of the present invention performs many more carry propagate/generate operations than the structure represented by Fig. 2. In accordance with the present invention, redundant overlapping carry propagate/ generate operations are performed. In the first core stage of the adder, stage 1, the number of carry generate/propagate operations performed is equal to the adder width minus 1, or 7 in the case of the 8-bit adder. In the second core stage of the adder, stage 2, the number of carry generate/propagate operations performed is equal to the adder width minus 2, or 6 in the case of the 8-bit adder. In the third core stage of the adder, stage 3, the number of carry generate/propagate operations performed is equal to the adder width divided by 2, or 4 in the case of the 8-bit adder. For subsequent core stages of the adder, the number of carry generate/propagate operations performed is also equal to the adder width divided by 2, or 4 in the case of the 8-bit adder.

Therefore, in accordance with the present invention, the routing complexity of the carry lookahead adder is increased and the internal block fanout is decreased, as discussed in detail below. However, since this increase in routing complexity is accomplished using redundant overlapping of the carry generate/propagate operations in the manner shown in Fig. 3, increases in the amount of area required for implementing the carry lookahead adder are not required.

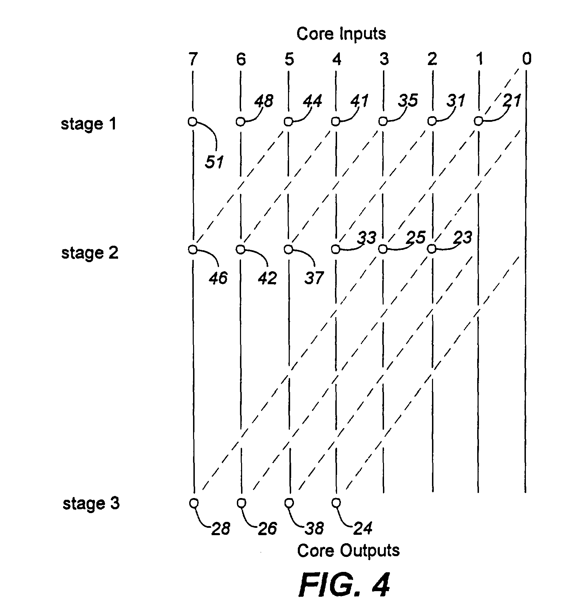

Fig. 4 functionally illustrates an 8-bit carry lookahead adder designed and implemented in accordance with the present invention. It can be seen in Fig. 4 that the carry lookahead adder implements the modified binary tree structure shown in Fig. 3. In Fig. 4, all of the carry generate/propagate operators of stages 1, 2 and 3 are shown rather than only those that comprise the critical path so that the routing complexity of the adder of the present invention can be clearly demonstrated. As shown in Fig. 4, bit 0 is routed to stage 1 and operated on by carry generate/propagate operator 21. Bit 0 is also routed to stage 2 and operated on by carry generate/propagate operator 23. Bit 0 is also routed to stage 3 and is operated on by carry generate/propagate operator 24. The result of the operations performed by carry generate/propagate operator 21 in stage 1 is then used in stage 2 by carry generate/propagate operator 25. The result of the operation performed by carry generate/propagate operator 23 is routed to stage 3 and operated on by carry generate/propagate operator 26. The result of the operation performed by carry generate/propagate operator 25 in stage 2 is routed to stage 3 and operated on by carry generate/propagate operator 28.

Generally, each of the carry generate/propagate operators shown in Fig. 4 produces a propagate signal and a generate signal, P and G, respectively. However, the output of the adder input stage carry generate/propagate operator represented by the bit 0 core input is only the generate signal, G, which is operated on by carry generate/propagate operators 21, 23 and 24. The adder input stage carry generate/propagate operator represented by the bit 1 core input produces a pair of generate and propagate signals that are operated on by carry generate/propagate operator 21 in stage 1 along with the generate signal produced by the adder input stage represented by the bit 0 core input. The propagate and generate signals corresponding to the adder input stage carry generate/propagate operator represented by the bit 1 core input are also utilized by carry generate/propagate operator 31 in stage 1 in conjunction with the propagate and generate signals produced by the adder input stage carry generate/propagate operator represented by the bit 1 core input. In turn, the carry generate/propagate operator 31 produces a pair of propagate and generate signals that are utilized by the carry generate/propagate operator 23 in stage 2 in conjunction with the generate signal produced by the adder input stage carry generate/propagate operator represented by the bit 0 core input.

The propagate and generate signals produced by carry generate/propagate operator 23 are utilized by carry generate/propagate operator 26 in stage 3 in conjunction with the propagate and generate signals produced by carry generate/propagate operator 42 in stage 2. The propagate and generate signals produced by carry generate/propagate operator 31 in stage 1 are also utilized by the carry generate/propagate operator 33 in stage 2. The carry generate/propagate operator 33 produces a pair of propagate and generate signals that are used by carry generate/propagate operator 24 in stage 3.

Since the routing complexity of the 8-bit adder of the present invention is clearly shown in Fig. 4 by the solid and dashed lines, in the interest of brevity, a detailed discussion of the routing of all of the propagate and generate signals and the operations performed thereon will not be provided herein.

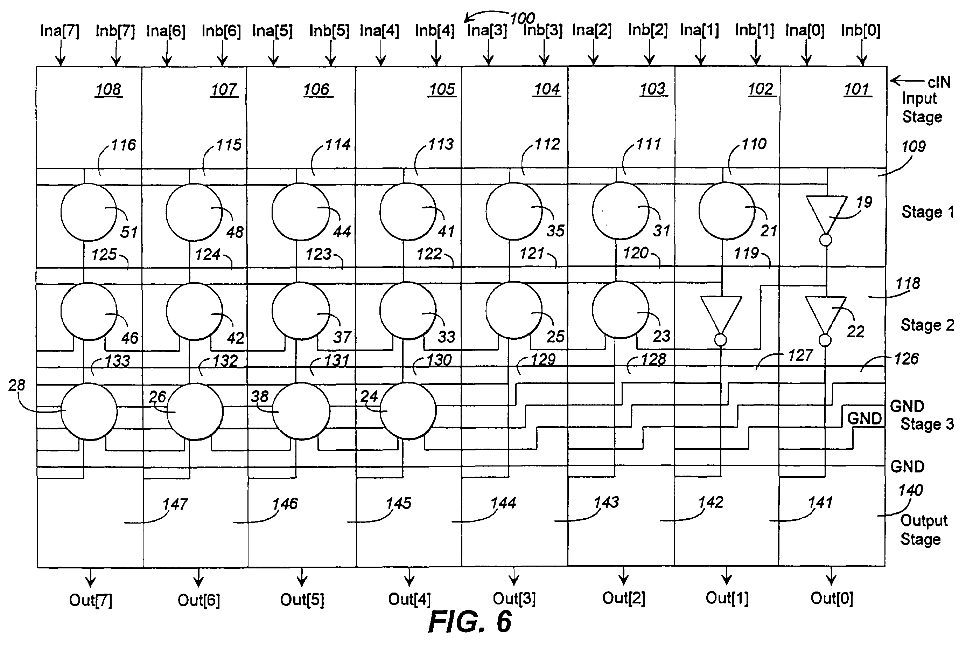

The core outputs of the adder shown in Fig. 4 are the generate signal produced by the adder input stage represented by the bit 0 core input and the generate signals produced by the carry generate/propagate operator 21 of stage 1, by carry generate/propagate operators 23 and 25 of stage 2 and by carry generate/propagate operators 24, 38, 26 and 28 of stage 3. However, an output stage of the adder which, for simplicity, is not shown in Fig. 4, operates on these generate signals to produce the final outputs of the adder. This output stage is discussed in detail below with respect to Fig. 6.

As stated above, in accordance with the present invention, the maximum internal block fanout of the carry lookahead adder is (adder width)/2 for adders that are at least 16 bits in width. For the 8-bit adder shown in Fig. 4, the maximum internal block fanout is 2, even though this does not equal (adder width)/8.

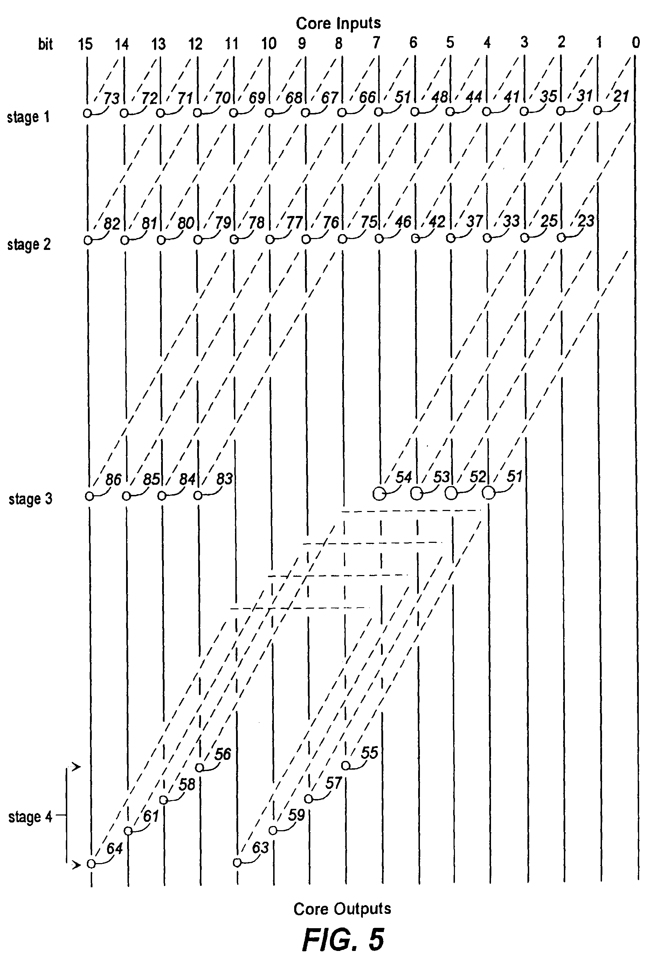

Fig. 5 is a drawing functionally illustrating a 16-bit adder in accordance with the present invention. As with the carry lookahead adder shown in Fig. 4, the carry lookahead adder of Fig. 5 also implements the modified binary tree structure shown in Fig. 3. The routing of the propagate and generate signals is very similar to the routing discussed above with respect to Fig. 4. In stages 1 and 2, the carry generate/propagate operators for bits 0-7 are identical to those discussed above with respect to Fig. 6. However, with respect to the carry generate/propagate operators in stage 3 for bits 4-7, the logic gates are larger, hence they have more drive capacity to accommodate the additional routing load generated by having to route farther over several FET blocks to the carry generate/propagate operators in stage 4. For example, the propagate and generate signals produced by carry generate/propagate operator 51 in stage 3 are provided to carry generate/propagate operators 55 and 56. Therefore, one pair of propagate and generate signals must be routed over the FET blocks in stage 4 corresponding to bits 5-7 to carry generate/propagate operator 55. The same pair of propagate and generate signals must be routed over the FET blocks in stage 4 corresponding to bits 5-11 to carry generate/propagate operator 56. Therefore, larger logic gates are needed for this larger routing distance.

However, it should be noted that, although larger gates are needed to maintain the necessary performance goals, each corresponding carry generate/propagate operator area is still implemented in the equivalent FET block area needed by other types of carry lookahead adder architectures. For example, the adder shown in Fig. 1 also is required to have a larger gate for core carry generate/propagate operator 10 in stage 3 to accommodate the increasing fanout. Consequently, the carry lookahead adder of the present invention, including all necessary routing paths and connections, can be, although it does not have to be, implemented in accordance with minimum silicon area requirements.

Since the carry generate/propagate operators for bits 0-7 in stages 1 and 2 of the carry lookahead adder of Fig. 5 are identical to the operations discussed above for the carry lookahead adder of Fig. 4, the routing of those bits in stages 1 and 2 will not be discussed with respect to the adder of Fig. 5.

With respect to bits 4-7 in stage 3, carry generate/propagate operator 51 receives the generate signal corresponding to bit 0 and the propagate and generate signals produced by carry generate/propagate operator 37 in stage 2. Carry generate/propagate operator 51 utilizes these signals to produce a pair of generate and propagate signals that are utilized by carry generate/propagate operators 55 and 56 in stage 4. Carry generate/propagate operator 52 in stage 3 utilizes the propagate and generate signals produced by carry generate/propagate operator 21 in stage 1 as well as the propagate and generate signals produced by carry generate/propagate operator 37 in stage 2. Carry generate/propagate operator 52 produces a pair of propagate and generate signals that are utilized in carry generate/propagate operators 57 and 58 in stage 4. Carry generate/propagate operator 53 in stage 3 utilizes the propagate and generate signals produced by carry generate/propagate operator 23 in stage 2 as well as the propagate and generate signals produced by carry generate/propagate operator 42 in stage 2 and produces a pair of propagate and generate signals that are utilized by carry generate/propagate operators 59 and 61 in stage 4. Carry generate/propagate operator 54 in stage 3 utilizes the propagate and generate signals produced by carry generate/propagate operator 25 in stage 2 as well as the propagate and generate signals produced by carry generate/propagate operator 46 in stage 2 and produces a pair of propagate and generate signals that are utilized by carry generate/propagate operators 63 and 64 in stage 4.

Stage 1 also comprises carry generate/propagate operators 66-73 which receive the propagate and generate signal pairs corresponding to the core inputs for bits 8-15. Carry generate/propagate operator 66 receives the propagate and generate signal pairs for bits 7 and 8 and produces a pair of propagate and generate signals that are provided to carry generate/propagate operators 75 and 77. Carry generate/propagate operator 75 produces propagate and generate signals that are utilized by carry generate/propagate operators 55 in stage 4 and 83 in stage 3. Carry generate/propagate operator 83 in stage 3 produces a pair of propagate and generate signals that are utilized by carry generate/propagate operator 56 in stage 4.

Carry generate/propagate operator 67 in stage 1 receives the propagate and generate signals for bits 8 and 9 of the core inputs and produces a pair of generate and propagate signals that are provided to carry generate/propagate operators 76 and 78 in stage 2. Carry generate/propagate operator 76 in stage 2 produces a pair of propagate and generate signals that are provided to carry generate/propagate operator 57 in stage 4 and carry generate/propagate operator 84 in stage 3. Carry generate/propagate operator 84 produces a pair of propagate and generate signals that are utilized by carry generate/propagate operator 58 in stage 4. Carry generate/propagate operator 78 in stage 2 produces a pair of propagate and generate signals that are utilized by carry generate/propagate operator 63 in stage 4 and carry generate/propagate operator 86 in stage 3.

Carry generate/propagate operator 86 generates a pair of propagate and generate signals that are utilized by carry generate/propagate operator 64 in stage 4. Carry generate/propagate operator 68 in stage 1 receives the propagate and generate signals for the core inputs corresponding to bits 9 and 10 and generates a pair of propagate and generate signals that are provided to carry generate/propagate operators 77 and 79 in stage 2. Carry generate/propagate operator 77 produces a pair of propagate and generate signals that are provided to carry generate/propagate operator 59 in stage 4 and to carry generate/propagate operator 85 in stage 3. Carry generate/propagate operator 85 in stage 3 produces a pair of propagate and generate signals that are utilized by carry generate/propagate operator 61 in stage 4.

Carry generate/propagate operator 69 in stage 1 receives the propagate and generate signals for the core inputs corresponding to bits 10 and 11 and generates a pair of propagate and generate signals that are provided to carry generate/propagate operator 78 and to carry generate/propagate operator 80 in stage 2. Carry generate/propagate operator 78 produces a pair of propagate and generate signals that are provided to carry generate/propagate operator 63 in stage 4 and to carry generate/propagate operator 86 in stage 3. Carry generate/propagate operator 86 in stage 3 produces a pair of propagate and generate signals that are provided to carry generate/propagate operator 64 in stage 4. Carry generate/propagate operator 70 receives the propagate and generate signals for the core inputs corresponding to bits 11 and 12 and produces a pair of propagate and generate signals that are provided to carry generate/propagate operators 79 and 81 in stage 2. Carry generate/propagate operator 79 produces a pair of propagate and generate signals that are utilized by carry generate/propagate operator 83 in stage 3. Carry generate/propagate operator 81 produces a pair of propagate and generate signals that are utilized by carry generate/propagate operator 85 in stage 3.

Carry generate/propagate operator 85 produces a pair of propagate and generate signals that are utilized by carry generate/propagate operator 61 in stage 4. Carry generate/propagate operator 71 in stage 1 receives the propagate and generate signals for the core inputs corresponding to bits 12 and 13 and generates a pair of propagate and generate signals that are provided to carry generate/propagate operators 80 and 82 in stage 2. Carry generate/propagate operator 80 produces a pair of propagate and generate signals that are provided to carry generate/propagate operator 84 in stage 3.

Carry generate/propagate operator 82 in stage 2 produces a pair of propagate and generate signals that are utilized by carry generate/propagate operator 86 in stage 3. Carry generate/propagate operator 72 in stage 1 utilizes the propagate and generate signals for the core inputs corresponding to bits 13 and 14 and produces a pair of propagate and generate signals that are provided to carry generate/propagate operator 81 in stage 2. Carry generate/propagate operator 73 in stage 1 utilizes the propagate and generate signals for the core inputs corresponding to bits 14 and 15 in stage 1 and produces a pair of propagate and generate signals that are utilized by carry generate/propagate operator 82 in stage 2.

As with the carry lookahead adder of Fig. 4, the maximum internal block fanout for the carry lookahead adder of Fig. 5 is (adder width)/8, or 2. The output of the carry lookahead adder in Fig. 5 for bits 0-15 corresponds to the generate signal for bit 0 and to the generate signals produced by carry generate/propagate operators 21, 23, 25, 51, 52, 53, 54, 55, 57, 59, 63, 56, 58, 61 and 64, respectively. However, these signals are further operated on by an adder output stage which, for ease of illustration, is not shown in Fig. 5. The output stage will be discussed in more detail below with respect to Fig. 6.

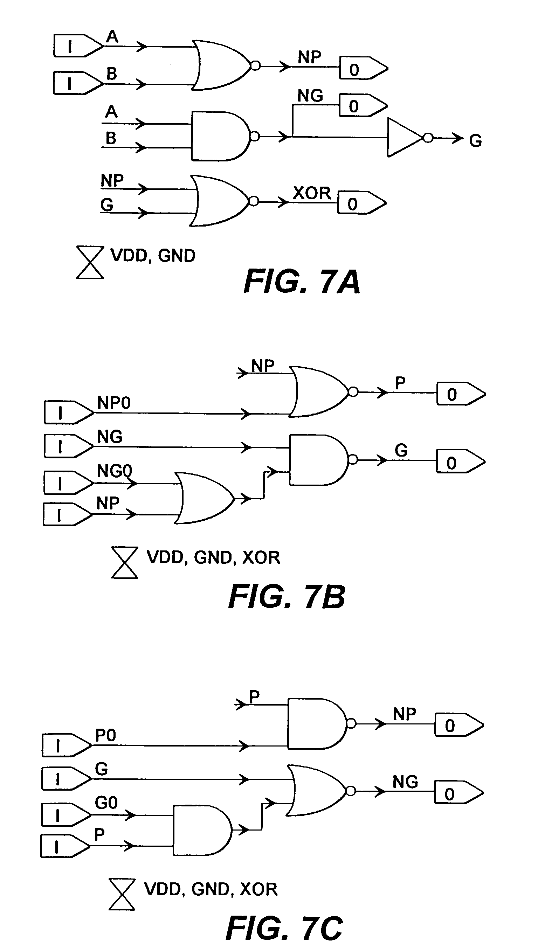

In order to better demonstrate the routing of bits in the carry lookahead adder of the present invention, Fig. 6 illustrates a functional schematic diagram of an 8-bit adder in accordance with the present invention. The carry generate/propagate operators shown in Fig. 6 are numbered to correspond to the carry generate/propagate operators in Fig. 4, except that the inverters 19, 22 and 27 shown in Fig. 6 were not shown in Fig. 4 for ease of illustration. The top row of blocks in Fig. 6 designated by numerals 101-108 correspond to the input stage of the adder 100. The logic comprised by each of the blocks 102-108 is illustrated by the schematic block diagram shown in Fig. 7A. The logic comprised by block 101 is not shown but is substantially identical to that shown in Fig. 7A except that a carry-in signal is used in conjunction with the inputs A (augend) and B (addend) to produce a generate signal. Blocks 101-108 correspond to bits 0-7, respectively.

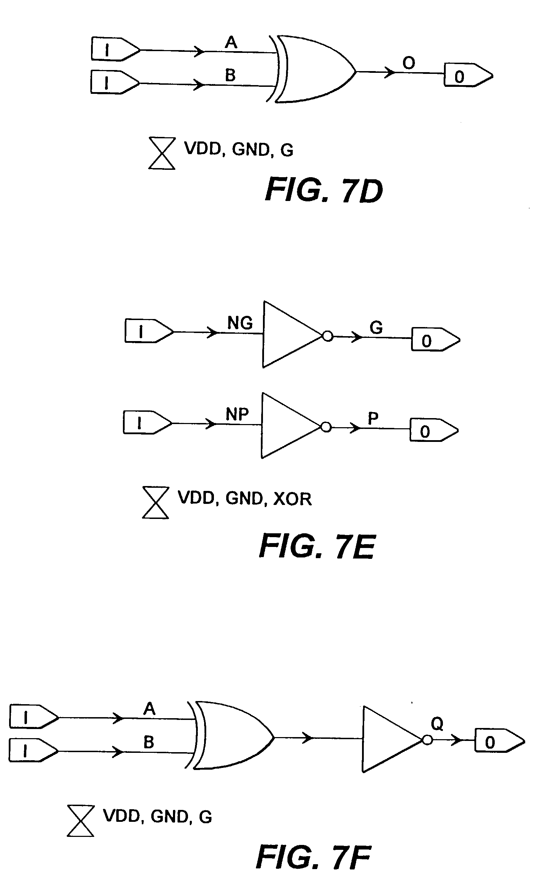

Blocks 109-116 correspond to stage 1 of the adder 100. Block 109 comprises an inverter 19, as shown. Blocks 110-116 each comprise the carry generate/propagate operator shown in Fig. 7F. Blocks 118-125 correspond to stage 2 of the adder 100. Block 118 comprises an inverter 22. Block 119 comprises the carry generate/propagate operators shown in Fig. 7E. Each of blocks 120-125 comprise the carry generate/propagate operators shown in Fig. 7C. Blocks 126-133 correspond to stage 3 of the adder 100. Blocks 126-129 do not contain any carry generate/propagate operators and the bits from the previous stages are simply routed through these blocks. Blocks 130-133 comprise the same carry generate/propagate operators as those shown in Fig. 7B for stage 1. Blocks 140-147 correspond to the output stage of the adder 100. Blocks 140 and 145-147 comprise the carry generate/propagate operators illustrated in Fig. 7D. Blocks 141-144 each comprise the early generate/propagate operator illustrated in Fig. 7F.

It should be noted that the input and output stages of the carry lookahead adder 100 were not discussed with respect to Figs. 4 and 5 in order to simplify the discussion of the routing of the generate and propagate signals through the adder 100. As stated above, each of the blocks of the input stage 101-108 comprise the carry generate/propagate operator shown in Fig. 7A. In Fig. 7A, the bits to be added are represented by the letters "A" and "B". The augend is represented by the letter "A" whereas the addend is represented by the letter "B." As shown in Fig. 7A, bits A and B are NORed together to produce the inverted propagate signal, NP. Bits A and B are NANDed together to produce the inverted generate signal, NG. The inverted generate signal NG is also inverted to produce the non-inverted generate signal, G. The NP signal is then NORed with the G signal to produce a signal referred to as XOR.

Block 101 produces the generate signal shown in Fig. 7A which is input into block 109. The signal NG from block 101 is utilized in block 110 by carry generate/propagate operator 21, which is functionally illustrated in Fig. 7B. Carry generate/propagate operator 21 also uses the NG and NP signals generated by the carry generate/propagate operator in block 102 (the XOR signal is simply passed through the block). The generate signal from block 101 corresponds to NG0 and NP0 is tied to VDD. The NG and NP signals in Fig. 7B correspond to the generate and propagate signals produced by the carry generate/propagate operator in block 102.

Each of the carry generate/propagate operators 31, 35, 41, 44, 48 and 51 in stage 1 receive the propagate and generate signals NP0 and NG0 from the carry generate/propagate operator corresponding to the previous bit in the input stage and the propagate and generate signals NP and NG from the carry generate/propagate operator immediately above it in the input stage. Each of the carry generate/propagate operators 21, 31, 35, 41, 44, 48 and 51 produce the generate and propagate signals that will be utilized by the subsequent stages of the adder 100, as discussed below in more detail.

Each of the carry generate/propagate operators 23, 25, 33, 37, 42 and 46 for the stage 2 of the adder 100 are comprised of the logic illustrated by the block diagram of Fig. 7C. Each carry generate/propagate operator in stage 2 receives propagate and generate signals, P0 and G0, respectively, from the carry generate/propagate operator corresponding to the previous bit in stage 1. Each of the carry generate/propagate operators in stage 2 also receives the propagate and generate signals, P and G, respectively, from the carry generate/propagate operator immediately above it in stage 1. The carry generate/propagate operators of stage 2 utilize these signals to produce inverted propagate and generate signals NP and NG shown in Fig. 7C which are utilized by the carry generate/propagate operators in the subsequent stages of the adder 100, as discussed below in more detail.

Carry generate/propagate operators 24, 38, 26 and 28 in stage 3 of the adder 100 each comprise the carry generate/propagate operator shown in Fig. 7B, which also corresponds to the carry generate/propagate operators used in stage 1, which were previously discussed. The inverted propagate and generate signals NP0 and NG0, respectively, in Fig. 7B correspond to propagate and generate signals produced by a carry generate/propagate operator of a previous stage. The inverted propagate and generate signals NP and NG in Fig. 7B correspond to the propagate and generate signals received by each of the carry generate/propagate operators in stage 3 from the carry generate/propagate operators immediately above them in stage 2. Carry generate/propagate operator 24 in stage 3 receives the propagate and generate signals output from the inverter 22 in block 118 of stage 2 as well as the propagate and generate circuits produced by carry generate/propagate operator 33 in stage 2. This is also indicated in Fig. 6 by the dashed line leading from bit 0 in stage 2 to carry generate/propagate operator 24 in stage 3 and by the solid line leading from carry generate/propagate operator 33 in stage 2 to carry generate/propagate operator 24 in stage 3.

The output of inverter 27 in stage 2 is routed across blocks 127, 128, 129 and 130 and then is input into carry generate/propagate operator 38 in stage 3 where it is utilized in conjunction with the inverted propagate and generate signals NP and NG output from carry generate/propagate operator 37 in stage 2. The output of carry generate/propagate operator 23 in stage 2 is routed across blocks 128, 129, 130 and 131 and then is input into the carry generate/propagate operator 26 in stage 3 where it is utilized by carry generate/propagate operator 26 in conjunction with the inverted propagate and generate signals NP and NG produced by and output from carry generate/propagate operator 42 in stage 2.

The inverted propagate and generate signals NP and NG output from carry generate/propagate operator 25 in stage 2 are routed over blocks 129, 130, 131 and 132 and then are input into carry generate/propagate operator 28 in stage 3 where they are utilized in conjunction with the inverted propagate and generate signals NP and NG produced by and output from carry generate/propagate operator 46 in stage 2. The routing of the propagate and generate signals NP and NG from the carry generate/propagate operators of stage 2 to the carry generate/propagate operators of stage 3 can also be seen in Fig. 6 as indicated by the dashed and solid lines.

As stated above, blocks 140 and 145-147 of the output stage of the adder 100 each comprise the carry generate/propagate operator shown in Fig. 7D. Bits A and B in Fig. 7D correspond, respectively, to the generate signals from the blocks in stage 3 (except that in block 140. bit A is the carry-in signal input into the adder 100), and to the XOR signal routed down from the input stage to the blocks in the output stage, respectively. Blocks 141-144 each comprise the carry generate/propagate operator shown in Fig. 7F. In Fig. 7F, bit A corresponds to the generate signal output from the carry generate/propagate operator in the last stage of the previous bit and bit B corresponds to the XOR signal output routed down to the output stage from the input stage. The outputs from blocks 140-147 of the output stage are the "Qs" shown in Figs. 5D and 5F.

Although Fig. 6 illustrates an 8-bit carry lookahead adder, those skilled in the art will understand the manner in which carry lookahead adders of greater or lesser width can be implemented utilizing the concepts of the present invention demonstrated above with respect to Figs. 3-7F. Generally, a 32-bit carry lookahead adder in accordance with the present invention can be implemented by combining two of the 16-bit adders functionally illustrated in Fig. 5. Similarly, a 64-bit adder can be implemented in accordance with the present invention by combining two 32-bit adders. The minimum width of the carry lookahead adder is 4. The manner in which this can be accomplished will be understood by those skilled in the art in view of the above discussion. Therefore, in the interest of brevity, and due to the difficulty of illustrating the routing of the propagate and generate signals in the manner shown in Fig. 6 for adders of greater width, such a discussion will not be provided. Also, it is believed that such a discussion would be redundant and unnecessary in view of the discussion provided above with respect to Figs. 3-7F.

As stated above, the maximum internal block fanout for the carry lookahead adders of the present invention illustrated by the drawings of Figs. 3-6 is 2. In accordance with the present invention, the core of the carry lookahead adder circuit is implemented in such a way that the total number of stages is equivalent to the quotient of the logarithm of the width of the adder divided by the logarithm of 2. The carry generate/propagate operators are located in such a manner that the maximum fanout is (adder width)/8. Therefore, in the case of a 16-bit adder, for example, the number of core stages (*i.e.*, not including input and output stages) is calculated as follows:

$$\text{Core Stages} = \frac{\text{Log } 16}{\text{Log } 2} = \frac{1.204}{0.301} = 4 \quad \text{(Equation 1)}$$

Equation 1 typically holds true for all carry lookahead adders. The generate/propagate operations for the adder of the present invention are defined as follows:

$$\text{Carry generate: gIN(i) = a(i)b(i)} \quad \text{(Equation 2)}$$

where

$$a(i), b(i) = \text{adder inputs}$$

$$\text{Carry propagate: pIN(i) = a(i) + b(i)} \quad \text{(Equation 3)}$$

$$\text{Carry: C(i) = G(i)} \quad \text{(Equation 4)}$$

where

$$[G(i), P(i)] = \begin{cases} [gIN(1), pIN(1)] & \text{for n=1} \\ [gIN(i), pIN(i)] \; o \; [G(i-1), P(i-1)] & \text{for } n \geq i > 1 \end{cases} \quad \text{(Equation 5)}$$

The logic functions performed by the operator "o" can be seen from the following equation:

$$[g(l), p(l)] \; o \; [g(r), p(r)] = [g(l) + p(l)g(r), p(l)p(r)] \quad \text{(Equation 6)}$$

In these equations, "i" represents the current bit and "n" represents the total number of bits of the adder. The variables "gIN" and "pIN" represent the generate and propagate signals, respectively, being received and input into a carry generate/propagate operator of one of the stages of the adder whereas the variables "G(i)" and "P(i)" represent the generate and propagate signals, respectively, being output from the same carry generate/propagate operator of the adder. The signal "G(i)" also represents the carry. The variables *"l"* and *"r"* in Equation 6 simply denotes the left side and the right side, respectively, of the equation.

Equations 2-6, which define the generate/propagate operations of a carry lookahead adder designed and/or implemented in accordance with the present invention, hold true regardless of the width of the carry lookahead adder. Those skilled in the art will understand, in view of the description provided above with respect to Figs. 3-7F and Equations 2-6, the manner in which a carry lookahead adder of any width can be designed and implemented in accordance with the present invention.

As stated above, the internal block fanout of the carry lookahead adder of the present invention is optimized by utilizing additional routing. However, the additional routing can be accomplished while minimizing area requirements of the adder due to the redundant overlapping carry propagate/generate operations utilized in the carry lookahead adder. Thus, the overall performance is improved in terms of reduced fanout and this can be accomplished while utilizing only the minimum area required to implement the carry lookahead adder architecture of the present invention. Furthermore, this relationship holds true regardless of the process used to fabricate the carry lookahead adder of the present invention, *i.e.*, the relationship is process-independent.

Different companies often use different processes to fabricate carry lookahead adders. For example, one company might have one standard that defines the width of the metal conductors in the integrated circuit whereas another company might have a different standard that defines a different metal width for the conductors in the integrated circuit. Regardless of the process utilized, the routing complexity area can be scaled to the FET area for optimal performance.

It should be noted that the present invention has been described with respect to particular embodiments for the purpose of describing the present invention, but that the present invention is not limited to these embodiments. For example, although carry lookahead adders are typically manufactured in silicon and the present invention has been described in some cases with respect to the silicon area required to implement the adder, those skilled in the art will understand that the present invention equally applies to materials other than silicon. Those skilled in the art will also understand that carry generate/propagate operators which are different from those shown in Figs. 7A-7F but which are logically equivalent to those circuits can be used in accordance with the present invention. For example, it is well known to replace a combination of NAND and NOR gates with a combination of AND and OR gates. Those skilled in the art will understand that other modifications to the present invention discussed above can be made which are within the scope of the present invention, even though such modifications may not have been explicitly discussed above with respect to Figs. 3-7F.

**Claims**

1. A carry lookahead adder (100) utilizing redundant overlapping of carry generate/propagate operations, the adder comprising:

   an input stage (Fig. 6, input stage) comprising at least first (101), second (102) and third (103) carry generate/propagate operators, the second carry generate/propagate operator (102) being adjacent the first (101) and third (103) carry generate/propagate operators, each input stage carry generate/propagate operator having an input and an output, each carry generate/propagate operator receiving at its input two bits to be added by the adder (100);
   a first core stage (Fig. 6, stage 1), the first core stage comprising at least first (21) and second (31) carry generate/propagate operators, the first (21) and second (31) carry generate/propagate operators of the first core stage being adjacent one another, each carry generate/propagate operator of the first core stage having an input and an output; and
   routing circuitry interconnecting the outputs of the first (101) and second (102) carry generate/propagate operators of the input stage to the input of the first carry generate/propagate operator (21) of the first core stage, the routing circuitry interconnecting the outputs of the second (102) and third (103) carry generate/propagate operators of the input stage to the input of the second (31) carry generate/propagate operator of the first core stage, whereby redundant overlapping of carry generate/propagate operations is achieved.

2. The carry lookahead adder (100) of claim 1, further comprising a second core stage (Fig. 6, stage 2), the second core stage comprising at least a first (23) carry generate/propagate operator, the routing circuitry interconnecting the outputs of each of the first (21) and second (31) carry generate/propagate operators of the first core stage with the input of the first (23) carry generate/propagate operator of the second core stage.

3. The carry lookahead adder of claim 1, wherein the carry lookahead adder (100) has a maximum internal block fanout of 2.

4. The carry lookahead adder of claim 2, wherein the carry lookahead adder (100) has a maximum internal block fanout of 2.

5. A carry lookahead adder (100) comprising:

   an input stage (Fig. 6, input stage) comprising at least N input stage carry generate/propagate operators (101-108), each input stage carry generate/propagate operator (101-108) having an input and an output, each carry generate/propagate operator (101-108) receiving at its input two bits to be operated on by the carry generate/propagate operator;
   a first core stage (Fig. 6, stage 1), the first core stage comprising N-1 carry generate/propagate operators (109-116), each carry generate/propagate operator of the first core stage having an input and an output; and
   routing circuitry interconnecting the outputs of each pair of adjacent carry generate/propagate operators ((101, 102), (102, 103), (103, 104), (104, 105), (105, 106), (106, 107), (107, 108)) of the input stage with the input of a single, respective carry generate/propagate operator (21, 31, 35, 41, 44, 48, 51) of the first core stage such that redundant overlapping of carry generate/propagate operations is achieved.

6. The carry lookahead adder (100) of claim 5, further comprising a second core stage (Fig. 6, stage 2), the second core stage comprising N-2 carry generate/propagate operators (23, 25, 33, 37, 42, 46), the routing circuitry interconnecting the outputs of each pair of adjacent carry generate/propagate operators of the first core stage ((21, 31), (31, 35), (35, 41), (41, 44), (44, 48), (48, 51)) with the input of a single, respective carry generate/propagate operator (23, 25, 33, 37, 42, 46) of the second core stage.

7. The carry lookahead adder (100) of claim 6, wherein the carry lookahead adder (100) has a maximum internal block fanout equal to adder width/8 for N equal to or greater than 16 and an internal block fanout equal to 2 for N less than 16.

8. A method for performing carry lookahead add operations in a carry lookahead adder, the method comprising the steps of:

receiving in an input stage of the carry lookahead adder a plurality of bits to be added by the carry lookahead adder, the input stage comprising at least first, second and third carry generate/propagate operators, the second carry generate/propagate operators being adjacent to the first and third carry generate/propagate operators, each carry generate/propagate operator receiving two of the bits and operating on the bits; and

receiving results of the operations performed by the first and second carry generate/propagate operators of the input stage at an input of a first carry generate/propagate operator of a first core stage;

receiving results of the operations performed by the second and third carry generate/propagate operators of the input stage at an input of a second carry generate/propagate operator of the first core stage; and

performing carry generate/propagate operations in each carry generate/propagate operator of the first core stage using the results received from the carry generate/propagate operators of the input stage and producing an output.

9. The method of claim 8, further comprising the steps of:

receiving in the input stage of the carry lookahead adder a plurality of bits to be added by the carry lookahead adder, the input stage further comprising fourth, fifth and sixth, the fourth carry generate/propagate operator being adjacent the third and fifth carry generate/propagate operators, the fifth carry generate/propagate operator being adjacent the fourth and sixth carry generate/propagate operators, each carry generate/propagate operator receiving two of the bits and operating on the bits; and

receiving results of the operations performed by the third and fourth carry generate/propagate operators of the input stage at an input of a third carry generate/propagate operator of the first core stage;

receiving results of the operations performed by the fourth and fifth carry generate/propagate operators of the input stage at an input of a fourth carry generate/propagate operator of the first core stage;

receiving results of the operations performed by the fifth and sixth carry generate/propagate operators of the input stage at an input of a fifth carry generate/propagate operator of the first core stage; and

performing carry generate/propagate operations in each carry generate/propagate operator of the first core stage using the results received from the carry generate/propagate operators of the input stage and producing an output.

10. The method of claim 9, further comprising the steps of:

receiving results of the operations performed by the first and second carry generate/propagate operators of the first core stage at an input of a first carry generate/propagate operator of a second core stage; receiving results of the operations performed by the second and third carry generate/propagate operators of the first core stage at an input of a second carry generate/propagate operator of the second core stage; receiving results of the operations performed by the third and fourth carry generate/propagate operators of the first core stage at an input of a third carry generate/propagate operator of the second core stage; and performing carry generate/propagate operations in each carry generate/propagate operator of the second core stage using the results received from the carry generate/propagate operators of the first stage and producing an output.

**FIG. 1**
*(PRIOR ART)*

8    7    6    5    4    3    2    1

4         3         2         1

2                   1

1

# Fig. 2

(PRIOR ART)

8   7   6   5   4   3   2   1

7   6   5   4   3   2   1   ← STAGE 1

6   5   4   3   2   1   ← STAGE 2

4   3   2   1   ← STAGE 3

# Fig. 3

FIG. 4

FIG. 5

*FIG. 6*

EP 0 984 356 A1

15

**FIG. 7A**

**FIG. 7B**

**FIG. 7C**

16

**FIG. 7D**

**FIG. 7E**

**FIG. 7F**

17

European Patent
Office

**EUROPEAN SEARCH REPORT**

Application Number

EP 99 10 8779

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 636 156 A (MIKAN JR DONALD G ET AL) 3 June 1997 (1997-06-03) * abstract * * column 3, line 66 - column 4, line 7; figure 3 * | 1-10 | G06F7/50 |
| A | HAN T ET AL: "VLSI DESIGN OF HIGH-SPEED, LOW-AREA ADDITION CIRCUITRY" PROCEEDINGS OF THE INTERNATIONAL CONFERENCE ON COMPUTER DESIGN: VLS IN COMPUTERS & PROCESSORS, NEW YORK, OCT. 5 - 8, 1987,5 October 1987 (1987-10-05), pages 418-422, XP000745195 INSTITUTE OF ELECTRICAL AND ELECTRONICS ENGINEERS ISBN: 0-8186-0802-1 * abstract * * paragraph '0003! * | 1-10 | |
| A | US 5 047 974 A (YOUNG WILLIAM R) 10 September 1991 (1991-09-10) * abstract * * column 11, line 46 - line 56; figure 7 * * column 13, line 56 - line 61; figure 11 * | 1-10 | |
| A | EP 0 707 262 A (IBM) 17 April 1996 (1996-04-17) * abstract * | 1-10 | TECHNICAL FIELDS SEARCHED (Int.Cl.7) G06F |

The present search report has been drawn up for all claims

| Place of search | Date of completion of the search | Examiner |
|---|---|---|
| THE HAGUE | 15 October 1999 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 99 10 8779

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-1999

| Patent document cited in search report | | Publication date | Patent family member(s) | | Publication date |
|---|---|---|---|---|---|
| US 5636156 | A | 03-06-1997 | NONE | | |
| US 5047974 | A | 10-09-1991 | NONE | | |
| EP 0707262 | A | 17-04-1996 | BR 9504270 A | | 22-12-1998 |
| | | | CA 2155379 A | | 15-04-1996 |
| | | | CN 1126859 A | | 17-07-1996 |
| | | | JP 8123666 A | | 17-05-1996 |
| | | | SG 33447 A | | 18-10-1996 |

EPO FORM P0459

For more details about this annex : see Official Journal of the European Patent Office, No. 12/82